# EUROPEAN PATENT SPECIFICATION

(11) **EP 2 090 397 B1**
(45) Date of publication and mention of the grant of the patent: **11.04.2012**
(21) Application number: 08425092.7
(22) Date of filing: 15.02.2008
(51) Int. Cl.: B23Q 7/00, B23Q 17/20, B23Q 17/24

(54) **Apparatus for handling profiles to be machined**
Vorrichtung zum Bewegen von zu bearbeitenden Profilen
Appareil pour le traitement de profils à usiner

(43) Date of publication of application: 19.08.2009
(73) Proprietor: ME.C.AL. S.p.A., 27030 Frascarolo (PV) (IT)
(72) Inventor: Cavezzale, Ennio, 27030 Frascarolo (PV) (IT)
(74) Representative: Perani, Aurelio

(56) References cited:
- EP-A- 1 277 542
- EP-A- 1 516 696
- WO-A-01/96041

## Description

The present invention relates to an apparatus and a method for handling profiles to be machined, preferably profiles with a substantially longitudinal extension according to the preambles of claims 1 and 8, as for example known from EP-A-1 516 696.

Such an apparatus and such a method may be conveniently used in warehouses or industrial plants for machining profiles.

Profiles are commonly used for forming structures and load-carrying parts in frameworks and/or for metal constructions in general.

Typically, it is necessary to perform, on these profiles, predefined machining operations such as, for example, milling, boring, cutting or welding operations.

It is known to use profile handling apparatus where the profiles are transported, by means of a feed unit, from an entry zone towards an exit zone and received by a machining unit which performs the machining operations.

It must be pointed out, however, that the profiles to be machined may have a shape and profiles which are also different from each other.

Therefore, during the machining operations, it is necessary for the profiles to be supported by suitable support means which, irrespective of the shape of the profile to be machined, are able to support stably the profile as well as allow easy disengagement at the end of the abovementioned machining operations.

In accordance with the known art, the handling apparatus have adjustment means which act on the abovementioned support means in order to adapt their configuration to the shape and/or outline of the profile. In particular, the profile, once it arrives in the machining unit, comes into contact with mechanical components such as callipers or feelers which measure their shape and/or outline. Transducers connected to the feelers then send signals relating to the measurement of the profile to the support means so that said means are configured to support the profile firmly.

These apparatus, however, have certain drawbacks. Firstly it must be pointed out that the measurement of the shapes and/or outlines of the profiles by means of mechanical components requires a not insignificant amount of time compared to the machining time since it is required to actuate the feelers to move away from and towards the profile and perform fine adjustment of the feeler feeding movement in order to verify the actual position where they come into contact with the profile. Moreover, since measurement and determination of the shapes and/or outlines of the profiles are performed solely in the machining unit, operation of the apparatus must be interrupted in order to allow the feelers to perform the movements necessary for carrying out measurement of the profiles.

From the above it is clear that there exists a need to provide an apparatus for handling profiles which permits easy and continuous measurement of the shape and/or outline of the profiles without interrupting the machining process, which is not dependent upon the measurement of the shape and/or the outline of the profiles in a predetermined unit and which is more versatile.

The object of the present invention is therefore to propose an apparatus for handling profiles with which it is able to satisfy the abovementioned requirements and overcome the drawbacks mentioned above with reference to the known art.

This object is achieved by an apparatus for handling profiles in accordance with Claim 1.

According to a further aspect, the invention relates to a method for handling profiles in accordance with Claim 8.

Further characteristic features and advantages of the present invention will become clear from the following detailed description of some preferred non-limiting embodiments thereof, provided with reference to the accompanying drawings, in which:
- Figure 1 shows an overall view of a profile handling apparatus according to the present invention;
- Figure 2 shows part of a feed unit of the profile handling apparatus according to Figure 1;
- Figure 3 shows a block diagram of the method for handling profiles according to the present invention.

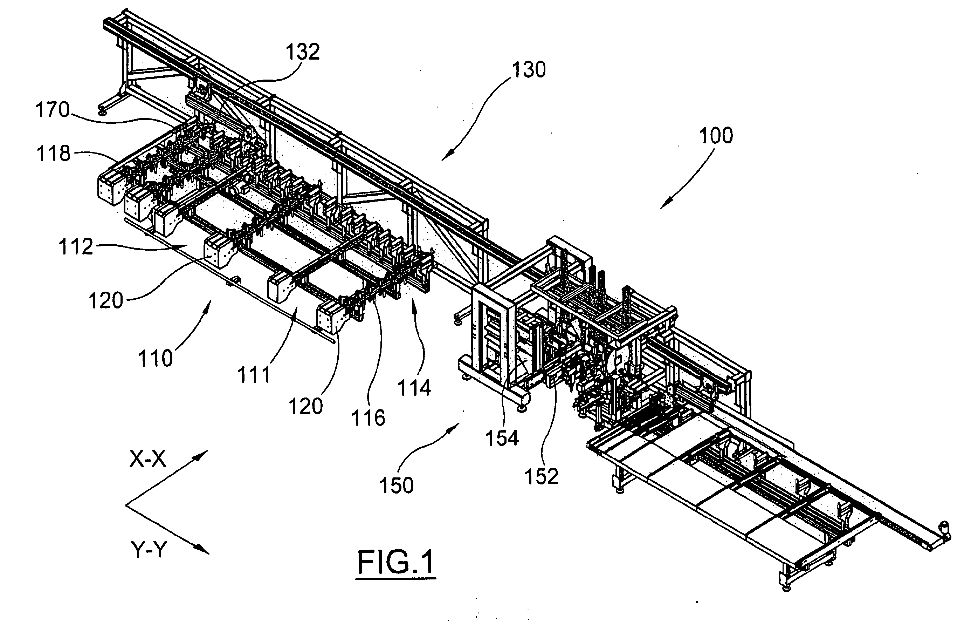

With reference to Figures 1 and 2, 100 denotes generically a profile handling apparatus designed to handle and machine profiles 10. The profiles 10 are profiles which are conventional in the machining sector and may be made of different materials such as, for example, metal, plastic or also wood or aluminium.

As shown in the embodiment according to Figure 1, the handling apparatus 100 has a feed unit 110, a conveying unit 130 and a machining unit 150.

The feed unit 110 comprises a support surface 111, which has an entry zone 112 and an exit zone 114, and first movement means 116 able to transport the profiles 10 from the entry zone 112 towards the exit zone 114, in a conveying direction X-X, which in the example is perpendicular to the direction of extension Y-Y of the profiles 10.

In accordance with the embodiment shown in the figures, the first movement means 116 comprise a plurality of transportation elements 120 extending in the conveying direction X-X and arranged alongside each other in the direction Y-Y.

In accordance with one embodiment, the feed unit 110 has locating means 118 which are positioned alongside the support surface 111 and extend in the direction X-X. These locating means 118 define the end-of-travel position of the profiles 10 in the direction Y-Y and guide the movement of the profiles 10 in the conveying direction X-X from the entry zone 112 towards the exit zone 114.

The conveying unit 130 is in a position adjacent to the feed unit 110 and co-operates with it so as to pick up the profiles 10 from the first movement means 116, in the exit zone 114. The feed unit 110 is provided with second movement means 132 able to transport the profiles picked up from the feed unit 110 towards the machining unit 150 in the transportation direction, which in the example corresponds to the direction Y-Y of extension of the profiles 10.

The machining unit 150 performs, on the profiles 10, the required machining operations such as, for example, boring, milling, cutting or welding. For this purpose, in a manner known per se, the handling apparatus 100 will be equipped with corresponding milling, boring, cutting or welding means.

During the abovementioned machining operations it is necessary to ensure that the profiles 10 are stably supported, irrespective of their shape and/or their outline.

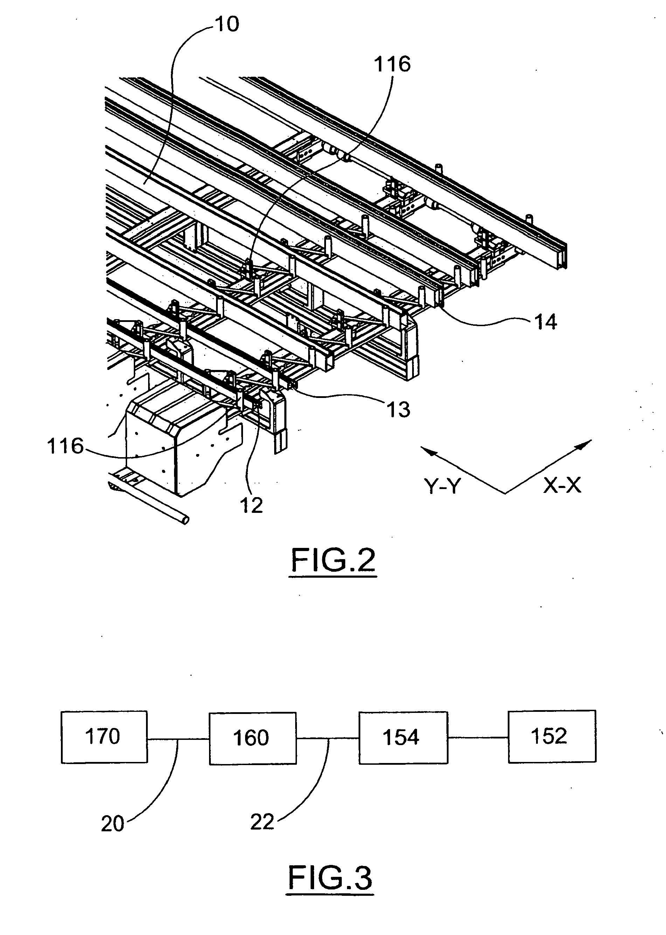

As shown in Figure 2, in fact, the profiles 10 may have different cross-profiles depending on their use. In the example shown, 12 denotes a profile which has a T-shaped cross-profile, 13 denotes a profile with an L-shaped cross-profile, and 14 denotes a profile with an irregular cross-profile.

The handling apparatus 100 is therefore equipped with support means 152 associated with the machining unit 150 and able to support the profiles 10 depending on their shape and/or their outline.

Furthermore the handling apparatus 100 is equipped with adjustment means 154 able to act on the support means 152 in order to adapt their configuration to the shape of the profile 10 to be supported.

In order to adapt the configuration of the support means 152, the handling apparatus 100 comprises video acquisition means 170 positioned in the vicinity of the feed unit 110 and configured so as to acquire information on the shape and/or the outline of the profiles 10.

The acquisition means 170 are able to generate, depending on the visual information acquired, an electric signal 20 which is sent to processing means 160 associated with the handling apparatus 100.

The processing means 160, in signal communication with the video acquisition means 170, are configured to:
- process the electric signal 20 so as to determine the shape of the profiles 10, and
- generate a processed signal 22 indicating the shape of the profiles 10 transported on said feed unit.

In this way it is therefore possible to have a handling apparatus 100 which allows acquisition of the shape and/or outlines of the profiles 10 during the machining process, achieving obvious advantages in terms of productivity and efficiency, eliminating, in fact, the downtime within the machining process.

Advantageously, the video acquisition means 170 are positioned in the exit zone 114 of the feed unit 110. In this way the support means 152 present in the machining unit 150 are always configured according to the shape of the last profile 10 leaving the feed unit 110, thus preventing any adjustment errors associated with the acquisition step.

According to one embodiment, the acquisition means 170 may be arranged in a position adjacent to the locating means 118. Since the profiles are positioned in contact with the locating means 118, acquisition of the shape and/or outline of the profiles 10 by the video acquisition means 170 is facilitated.

The acquisition means 170 may comprise telecameras, smart cameras, scanners, profilometers or electric detection devices.

As indicated by the block diagram in Figure 3, the adjustment means 154, in signal communication with the processing means 160, receive the processed signal 22 from the processing means 160 in order to act on the support means 152 so as to adapt their configuration to the shape of the profiles 10 acquired by the acquisition means 170. In this way the profile 10 is stably supported by the support means 152 during all the machining operations.

A method for handling the profiles 10 in accordance with the present invention is now described. According to this method it is envisaged:
- transporting the profiles 10 in the feed unit 110 from the entry zone 112 towards the exit zone 114 by means of the first movement means 116;
- moving the profiles 10 from the feed unit towards 110 the machining unit 150 by means of the conveying unit 130;
- receiving the profiles 10 on the machining unit 150 from the feed unit 110;
- supporting the profiles 10 by means of the support means 152 associated with the machining unit 150;
- acting on the support means 152 by means of the adjustment means 154 so as to adapt their configuration to the shape of the profiles 10 to be supported.

Advantageously, the handling method 10 envisages the acquisition of video information on the shape of the profiles 10 transported in the feed unit 110. The information on the shape of the profiles 10 is used to adapt the configuration of the support means 152 to the profile of the profile 10 to be supported in the machining unit 150.

In accordance with one embodiment, the handling method envisages acquiring information on the shape of the profiles 10 downstream of the entry zone 112, advantageously in the exit zone 114. In this way, the support means 152 present in the machining unit 150 are always configured according to the shape of the last profile 10 leaving the feed unit 110, thus preventing any adjustment errors associated with the acquisition step. In particular, the handling method may envisage acquiring information on the shape of the profiles 10 next to the locating means 118.

Furthermore, acquisition of the video information on the shape of the profiles 10 transported in the feed unit 110 envisages the following steps:
- generating an electric signal 20 depending on the information acquired, processing the electric signal 20 so as to determine the shape of the profiles 10 transported by the feed unit 110, generating a processed signal 22 indicating the shape of the profiles 10, and sending the processed signal 22 to the adjustment means 154;
- adjusting the support means 152 depending on the processed signal 22 so that the profiles 10 are stably supported by the support means 152 during the machining operations.

Finally it is clear that the apparatus and the method described and illustrated above may be subject to numerous modifications and variants, all falling within the scope of the inventive idea, as defined in the accompanying claims.

## Claims

1. Apparatus (100) for handling profiles to be machined (10), comprising:
- a feed unit (110) comprising a loading surface (111) for profiles (10), having an entry zone (112) and an exit zone (114);
- first movement means (116) associated with said feed unit (110) and able to transport the profiles (10) from the entry zone (112) towards the exit zone (114);
- a machining unit (150) able to receive the profiles (10) from said feed unit (110) and comprising machining means (156) able to operate on said profiles (10);
- support means (152) associated with said machining unit (150) and able to support at least one profile (10) during said machining operations;
- adjustment means (154) able to act on said support means (152) so as to adapt their configuration to the shape of said at least one profile (10) to be supported,
**characterized in that** it comprises:
- video acquisition means (170) positioned in the vicinity of said feed unit (110) and configured to acquire information on the shape of said profiles (10) transported on said feed unit (110) and generate an electric signal (20) depending on said information acquired;
- processing means (160) in signal communication with said video acquisition means (170) and said adjustment means (154) and configured so as to:
- process the electric signal (20) generated by said video acquisition means (170) in order to determine the shape of said profiles;
- generate a processed signal (22) indicating the shape of said profiles transported on said feed unit (110);
- supply said processed signal (22) to said adjustment means (154) in order to allow said adjustment means (154) to act on said support means (152) so as to adapt their configuration to the shape of the profiles (10) to be supported so that said at least one profile (10) is stably supported by said support means (152) during said machining operations.

2. Apparatus (100) according to Claim 1, in which said video acquisition means (170) are positioned downstream of said entry zone (112).

3. Apparatus (100) according to Claim 1 or 2, in which said video acquisition means (170) are positioned in correspondence of said exit zone (114).

4. Apparatus (100) according to any one of Claims 1 to 3, in which said feed unit (110) is equipped with locating means (118) positioned alongside the support surface (111) for defining the end-of-travel position of the profiles (10) in the direction of extension (Y-Y) of the profiles, said video acquisition means (170) being arranged in a position adjacent to said locating means (118).

5. Apparatus (100) according to any one of Claims 1 to 4, comprising a conveying unit (130) for said profiles (10), positioned between said feed unit (110) and said machining unit (150), said conveying unit (130) comprising second movement means (132) able to transport, in succession, said at least one profile (10) from said feed unit (110) towards said machining unit (150), in a transportation direction (Y-Y).

6. Apparatus (100) according to Claim 5, in which said transportation direction (Y-Y) of said second movement means (132) is substantially perpendicular to said direction of conveying (X-X) of said profiles (10) in said feed unit (110).

7. Apparatus (100) according to any one of Claims 1 to 6, in which said acquisition means (170) are chosen from the group comprising a telecamera, a smart camera, a scanner, a profilometer, and an electric detection device.

8. Method for handling profiles (10), said method comprising the steps of:
a) transporting said profiles (10) on a feed unit (110) from an entry zone (112) towards an exit zone (114) by means of first movement means (116) associated with said feed unit (110);
b) receiving said profiles (10) in a machining unit (150) from said feed unit (110), said machining unit (150) comprising machining means (156) able to operate on said profiles (10);
c) supporting said profiles (10) by means of support means (152), associated with said machining unit (150), said support means (152) being able to support said profiles (10) during said machining operations;
d) acting on said support means (152) by means of adjustment means (154) so as to adapt their configuration to the shape of the profiles (10) to be supported,
**characterized in that** it comprises the steps of:
e) acquiring video information on the shape of said profiles (10) transported in said feed unit (110);
f) generating an electric signal (20) depending on said information acquired, processing said electric signal (20) so as to determine the shape of said profiles (10) transported by said feed unit (110), generating a processed signal (22) indicating the shape of said profiles (110) and sending said processed signal (22) to said adjustment means (154);
g) adjusting said support means (152) depending on said processed signal (22) so that said profiles (10) are stably supported by said support means (152) during said machining operations.

9. Method according to Claim 8, in which said acquisition step e) is performed downstream of the entry zone (112) of the feed unit (110).

10. Method according to Claim 8 or 9, in which said acquisition step e) is performed in the exit zone (114) of the feed unit (110).

11. Method according to any one of Claims 8 to 10, comprising the further step h) of moving said profiles (10) from said feed unit (110) towards said machining unit (15) by means of a conveying unit (130) comprising second movement means (132).

## Patentansprüche

1. Vorrichtung (100) zum Handhaben von Profilen, die bearbeitet (10) werden sollen, wobei die Vorrichtung Folgendes umfasst:
- eine Zufuhreinheit (110), die eine Ladeoberfläche (111) für Profile (10) umfasst, die eine Eingabezone (112) und eine Ausgabezone (114) aufweist;
- erste Bewegungsmittel (116), die der Zufuhreinheit (110) zugeordnet sind und die Profile (10) von der Eingabezone (112) zur Ausgabezone (114) transportieren können;
- eine Bearbeitungseinheit (150), die die Profile (10) von der Zufuhreinheit (110) empfangen kann und Bearbeitungsmittel (156) umfasst, die an den Profilen (10) wirksam werden können;
- Unterstützungsmittel (152), die der Bearbeitungseinheit (150) zugeordnet sind und wenigstens ein Profil (10) während der Bearbeitungsoperationen unterstützen können;
- Einrichtungsmittel (154), die an den Unterstützungsmitteln (152) wirken können, um ihre Konfiguration an die Form des wenigstens einen Profils (10), das unterstützt werden soll, anzupassen;
**dadurch gekennzeichnet, dass** sie umfasst:
- Video-Erfassungsmittel (170), die in der Nähe der Zufuhreinheit (110) positioniert sind und eingerichtet sind, um Informationen über die Form der Profile (10), die auf der Zufuhreinheit (110) transportiert werden, zu erfassen und ein elektrisches Signal (20) in Abhängigkeit von den erfassten Informationen zu erzeugen;
- Verarbeitungsmittel (160), die mit den Video-Erfassungsmitteln (170) und den Einrichtungsmitteln (154)in Signalverbindung stehen und eingerichtet sind zum
- Verarbeiten des elektrischen Signals (20), das von den Video-Erfassungsmitteln (170) erzeugt wird, um die Form der Profile zu bestimmen;
- Erzeugen eines verarbeiteten Signals (22), das die Form der Profile, die auf der Zufuhreinheit (110) transportiert werden, angibt; und
- Liefern des verarbeiteten Signals (22) an die Einrichtungsmittel (154), um zu ermöglichen, dass die Einrichtungsmittel (154) an den Unterstützungsmitteln (152) wirken, um ihre Konfiguration an die Form der Profile (10), die unterstützt werden sollen, anzupassen, so dass das wenigstens eine Profil (10) durch die Unterstützungsmittel (152) während Bearbeitungsoperationen stabil unterstützt wird.

2. Vorrichtung (100) nach Anspruch 1, wobei die Video-Erfassungsmittel (170) stromabseitig von der Eingabezone (112) positioniert sind.

3. Vorrichtung (100) nach Anspruch 1 oder 2, wobei die Video-Erfassungsmittel (170) in Übereinstimmung mit der Ausgabezone (114) positioniert sind.

4. Vorrichtung (100) nach einem der Ansprüche 1 bis 3, wobei die Zufuhreinheit (110) mit Ortungsmitteln (118) ausgestattet sind, die längs der Unterstützungsoberfläche (111) positioniert sind, um die Endlagenposition der Profile (10) in der Ausdehnungsrichtung (Y-Y) der Profile zu definieren, wobei die Video-Erfassungsmittel (170) in einer Position, die zu den Ortungsmitteln (118) benachbart ist, angeordnet sind.

5. Vorrichtung (100) nach einem der Ansprüche 1 bis 4, die eine Fördereinheit (130) für die Profile (10) umfasst, die zwischen der Zufuhreinheit (110) und der Bearbeitungseinheit (150) positioniert ist, wobei die Fördereinheit (130) zweite Bewegungsmittel (132) umfasst, die nacheinander das wenigstens eine Profil (10) von der Zufuhreinheit (110) zu der Bearbeitungseinheit (150) in einer Transportrichtung (Y-Y) transportieren können.

6. Vorrichtung (100) nach Anspruch 5, wobei die Transportrichtung (Y-Y) der zweiten Bewegungsmittel (132) im Wesentlichen senkrecht zu der Förderrichtung (X-X) der Profile (10) in der Zufuhreinheit (110) verläuft.

7. Vorrichtung (100) nach einem der Ansprüche 1 bis 6, wobei die Erfassungsmittel (170) aus der Gruppe gewählt sind, die eine Fernsehkamera, eine Smartkamera, eine Abtasteinrichtung, einen Profilmesser und eine elektrische Detektionseinrichtung enthält.

8. Verfahren zum Handhaben von Profilen (10), wobei das Verfahren die folgenden Schritte umfasst:
a) Transportieren der Profile (10) auf einer Zufuhreinheit (110) von einer Eingabezone (112) zu einer Ausgabezone (114) mittels erster Bewegungsmittel (116), die der Zufuhreinheit (110) zugeordnet sind;
b) Empfangen der Profile (10) in einer Bearbeitungseinheit (150) von der Zufuhreinheit (110), wobei die Bearbeitungseinheit (150) Bearbeitungsmittel (156) umfasst, die an den Profilen (10) wirksam werden können;
c) Unterstützen der Profile (10) mittels Unterstützungsmitteln (152), die der Bearbeitungseinheit (150) zugeordnet sind, wobei die Unterstützungsmittel (152) die Profile (10) während der Bearbeitungsoperationen unterstützen können;
d) Wirken an den Unterstützungsmitteln (152) durch Einrichtungsmittel (154), um ihre Konfiguration an die Form der Profile (10), die unterstützt werden sollen, anzupassen,
**dadurch gekennzeichnet, dass** es die folgenden Schritte umfasst:
e) Erfassen von Videoinformationen über die Form der Profile (10), die in der Zufuhreinheit (110) transportiert werden;
f) Erzeugen eines elektrischen Signals (20) in Abhängigkeit von den erfassten Informationen, Verarbeiten des elektrischen Signals (20), um die Form der Profile (10), die durch die Zufuhreinheit (110) transportiert werden, zu bestimmen, Erzeugen eines verarbeiteten Signals (22), das die Form der Profile (110) angibt, und Senden des verarbeiteten Signals (22) an die Einrichtungsmittel (154);
g) Einrichten der Unterstützungsmittel (152) in Abhängigkeit dem verarbeiteten Signal (22), so dass die Profile (10) durch die Unterstützungsmittel (152) während der Bearbeitungsoperationen stabil unterstützt werden.

9. Verfahren nach Anspruch 8, wobei der Erfassungsschritt e) stromabseitig von der Eingabezone (112) der Zufuhreinheit (110) ausgeführt wird.

10. Verfahren nach Anspruch 8 oder 9, wobei der Erfassungsschritt e) in der Ausgabezone (114) der Zufuhreinheit (110) ausgeführt wird.

11. Verfahren nach einem der Ansprüche 8 bis 10, das des Weiteren den Schritt h) zum Bewegen der Profile (10) von der Zufuhreinheit (110) zu der Bearbeitungseinheit (15) mittels einer Fördereinheit (130), die zweite Bewegungsmittel (132) enthält, umfasst.

## Revendications

1. Appareil (100) pour manipuler des profils à usiner (10), comprenant :
une unité d'alimentation (110) comprenant une surface de chargement (111) pour les profils (10), ayant une zone d'entrée (112) et une zone de sortie (114) ;
des premiers moyens de déplacement (116) associés à ladite unité d'alimentation (110) et pouvant transporter les profils (10) de la zone d'entrée (112) vers la zone de sortie (114) ;
une unité d'usinage (150) pouvant recevoir les profils (10) de ladite unité d'alimentation (110) et comprenant des moyens d'usinage (156) pouvant fonctionner sur lesdits profils (10) ;
des moyens de support (152) associés à ladite unité d'usinage (150) et pouvant supporter au moins un profil (10) pendant lesdites opérations d'usinage ;
des moyens d'ajustement (154) pouvant agir sur lesdits moyens de support (152) afin d'adapter leur configuration à la forme dudit au moins un profil (10) à supporter,
**caractérisé en ce qu'**il comprend :
des moyens d'acquisition de vidéo (170) positionnés à proximité de ladite unité d'alimentation (110) et configurés pour acquérir l'information concernant la forme desdits profils (10) transportés sur ladite unité d'alimentation (110) et générer un signal électrique (20) dépendant de ladite information acquise ;
des moyens de traitement (160) en communication de signal avec lesdits moyens d'acquisition de vidéo (170) et lesdits moyens d'ajustement (154) et configurés afin de :
traiter le signal électrique (20) généré par lesdits moyens d'acquisition de vidéo (170) afin de déterminer la forme desdits profils ;
générer un signal (22) traité indiquant la forme desdits profils transportés sur ladite unité d'alimentation (110) ;
amener ledit signal traité (22) auxdits moyens d'ajustement (154) pour permettre auxdits moyens d'ajustement (154) d'agir sur lesdits moyens de support (152) afin d'adapter leur configuration à la forme des profils (10) à transporter de sorte que ledit au moins un profil (10) est supporté de manière stable par lesdits moyens de support (152) pendant lesdites opérations d'usinage.

2. Appareil (100) selon la revendication 1, dans lequel lesdits moyens d'acquisition de vidéo (170) sont positionnés en aval de ladite zone d'entrée (112).

3. Appareil (100) selon la revendication 1 ou 2, dans lequel lesdits moyens d'acquisition de vidéo (170) sont positionnés en correspondance de ladite zone de sortie (114).

4. Appareil (100) selon l'une quelconque des revendications 1 à 3, dans lequel ladite unité d'alimentation (110) est équipée avec des moyens de positionnement (118) positionnés le long de la surface de support (111) pour définir la position de fin de course des profils (10) dans la direction d'extension (Y-Y) des profils, lesdits moyens d'acquisition de vidéo (170) étant agencés dans une position adjacente auxdits moyens de positionnement (118).

5. Appareil (100) selon l'une quelconque des revendications 1 à 4, comprenant une unité de transport (130) pour lesdits profils (10), positionnée entre ladite unité d'alimentation (110) et ladite unité d'usinage (150), ladite unité de transport (130) comprenant des deuxièmes moyens de déplacement (132) capables de transporter, successivement, ledit au moins un profil (10) de ladite unité d'alimentation (110) vers ladite unité d'usinage (150), dans une direction de transport (Y-Y).

6. Appareil (100) selon la revendication 5, dans lequel ladite direction de transport (Y-Y) desdits deuxièmes moyens de déplacement (132) est sensiblement perpendiculaire à ladite direction de transport (X-X) desdits profils (10) dans ladite unité d'alimentation (110).

7. Appareil (100) selon l'une quelconque des revendications 1 à 6, dans lequel lesdits moyens d'acquisition (170) sont choisis dans le groupe comprenant une caméra de prises de vues, une caméra intelligente, un scanner, un profilomètre et un dispositif de détection électrique.

8. Procédé pour manipuler des profils (10), ledit procédé comprenant les étapes consistant à :
a) transporter lesdits profils (10) sur une unité d'alimentation (110) à partir d'une zone d'entrée (112) vers une zone de sortie (114) au moyen de premiers moyens de déplacement (116) associés à ladite unité d'alimentation (110) ;
b) recevoir lesdits profils (10) dans une unité d'usinage (150) à partir de ladite unité d'alimentation (110), ladite unité d'usinage (150) comprenant des moyens d'usinage (156) pouvant fonctionner sur lesdits profils (10) ;
c) supporter lesdits profils (10) au moyen de moyens de support (152), associés à ladite unité d'usinage (150), lesdits moyens de support (152) pouvant supporter lesdits profils (10) pendant lesdites opérations d'usinage ;
d) agir sur lesdits moyens de support (152) au moyen de moyens d'ajustement (154) afin d'adapter leur configuration à la forme des profils (10) à supporter,
**caractérisé en ce qu'**il comprend les étapes consistant à :
e) acquérir une information vidéo concernant la forme desdits profils (10) transportés dans ladite unité d'alimentation (110) ;
f) générer un signal électrique (20) en fonction de ladite information acquise, traiter ledit signal électrique (20) afin de déterminer la forme desdits profils (10) transportés par ladite unité d'alimentation (110), générer un signal traité (22) indiquant la forme desdits profils (110) et envoyer ledit signal traité (22) auxdits moyens d'ajustement (154) ;
g) ajuster lesdits moyens de support (152) en fonction dudit signal traité (22) de sorte que lesdits profils (10) sont supportés de manière stable par lesdits moyens de support (152) pendant lesdites opérations d'usinage.

9. Procédé selon la revendication 8, dans lequel ladite étape d'acquisition e) est réalisée en aval de la zone d'entrée (112) de l'unité d'alimentation (110).

10. Procédé selon la revendication 8 ou 9, dans lequel ladite étape d'acquisition e) est réalisée dans la zone de sortie (114) de l'unité d'alimentation (110).

11. Procédé selon l'une quelconque des revendications 8 à 10, comprenant l'étape h) supplémentaire consistant à déplacer lesdits profils (10) provenant de ladite unité d'alimentation (110) vers ladite unité d'usinage (15) au moyen d'une unité de transport (130) comprenant des deuxièmes moyens de déplacement (132).
